# EUROPÄISCHE PATENTANMELDUNG

(11) **EP 4 545 926 A1**
(43) Veröffentlichungstag der Anmeldung: **30.04.2025**
(21) Anmeldenummer: 24401025.2
(22) Anmeldetag: 25.10.2024
(51) Int. Cl.: G01L 1/24, G01L 5/166, G01L 5/22, G01M 11/08, G01G 3/12

(54) **SELBSTTRAGENDE VORRICHTUNG (TENSENS-PLATFORM) MIT VORGESPANNTEN OPTISCHEN FASERN ZUR ERMITTLUNG EINER ÄUSSEREN KRAFT MIT ZUGEHÖRIGEM ANGRIFFSPUNKT**

(30) Priorität: 27.10.2023 DE 102023129800
(71) Anmelder: Technische Universität Ilmenau, 98693 Ilmenau (DE)
(72) Erfinder: Zentner, Lena, 98693 Ilmenau (DE); Merker, Lukas, 98693 Ilmenau (DE); Kissinger, Thomas, 98693 Ilmenau (DE); Böhm, Valter, 93049 Regensburg (DE); Herrmann, David, 92539 Schönsee (DE)

(57) **Zusammenfassung**

Die Erfindung betrifft eine selbsttragende Vorrichtung (TenSens-Platform - im Folgenden als Sensorvorrichtung bezeichnet) mit vorgespannten faseroptischen Sensoren sowie ein dazugehöriges Verfahren, um aus den detektierten Dehnungen der faseroptischen Sensoren auf eine an der Vorrichtung angreifende äußere Kraft zurückzurechnen. Je nach Ausführungsart können der Betrag der Kraft, ihre Richtung sowie ihr Angriffspunkt ermittelt werden, sodass die Vorrichtung z. B. zur Kraftmessung, -lokalisation oder Massen- und Schwerpunktbestimmung, z. B. in der Robotik oder Wägetechnik, Anwendung finden kann.

## Beschreibung

### Gebiet der Erfindung

Die Erfindung betrifft das Gebiet der Sensorik, insbesondere der Kraftmesssensoren. Sie betrifft eine selbsttragende Vorrichtung (TenSens-Platform - im Folgenden als Sensorvorrichtung bezeichnet) mit vorgespannten faseroptischen Sensoren sowie ein dazugehöriges Verfahren, um aus den detektierten Dehnungen der faseroptischen Sensoren auf eine an der Vorrichtung angreifende äußere Kraft zurückzurechnen. Je nach Ausführungsart können der Betrag der Kraft, ihre Richtung sowie ihr Angriffspunkt ermittelt werden, sodass die Vorrichtung z. B. zur Kraftmessung, -lokalisation oder Massen- und Schwerpunktbestimmung, z. B. in der Robotik oder Wägetechnik, Anwendung finden kann.

### Stand der Technik

Die aus dem Stand der Technik bekannten faseroptischen Sensoren können dehnungsinduzierte Veränderungen der optischen Pfaddifferenz über ein durch Reflexionselemente definiertes Fasersegment mittels Range-Resolved Interferometry (RRI) detektieren. Zu ihren Vorteilen gehören hohe Auflösungen-und-dynamische-Bandbreiten geringer Bauraum, hohe mechanische Flexibilität, hohe Energieeffizienz sowie ihre Unempfindlichkeit gegenüber Feuchtigkeit, thermischen und magnetischen Einflüssen. Darüber hinaus können mehrere Sensorsegmente entlang einer einzigen Faser verkettet und gleichzeitig ausgelesen werden, um Kosten, Installationsaufwand und Platzbedarf zu reduzieren [1].

Bisherige Anwendungsfälle faseroptischer Sensoren im Kontext der Kraftmessung beruhen zumeist auf der Integration (z. B. durch Kleben) der Fasern der faseroptischen Sensoren in oder auf einen Verformungskörper (Trägerkörper), sodass dessen Verformung unter äußeren Lasten messbare Dehnungen in den Fasern hervorruft [2-4]. Die Gestalt (Geometrie- und Materialeigenschaften) des Verformungskörpers beeinflusst dabei maßgeblich das Steifigkeits- und Verformungsverhalten der Gesamtstruktur. So können geometrische und/oder materialbedingte Abweichungen des Verformungskörpers ein asymmetrisches Steifigkeitsverhalten verursachen. Dies kann zusammen mit asymmetrischen Lastverteilungen zu komplexen mehrachsigen Spannungszuständen im Verformungskörper und bspw. in der Wägetechnik zum typischen Problem der Ecklastempfindlichkeit führen [5].

Ein wesentliches Merkmal der vorgestellten Sensorvorrichtung besteht in dem Verzicht auf einen Verformungskörper als Trägerkörper für die Aufnahme der optischen Fasern. Dies gelingt durch eine geeignete Anordnung (Verschaltung) und Vorspannung optischer Fasern in einer Weise, dass diese gleichzeitig sowohl als tragende Strukturelemente als auch als Messmittel dienen (Multifunktionalität). Zu diesem Zweck eignen sich sogenannte Tensegrity-Strukturen. Der Begriff Tensegrity setzt sich aus den englischen Begriffen "tension" (Zugspannung) und "integrity" (Zusammenhalt) zusammen. Bei dieser speziellen Klasse mechanischer Strukturen handelt es sich um vorgespannte, formstabile Stabwerke bestehend aus Zug- und Druckelementen. Dabei sind die Druckelemente stets indirekt, d. h. ohne direkten Kontakt zwischen benachbarten Druckelementen, durch ein kontinuierliches Netz von Zugelementen miteinander verbunden [6]. Die Verformung solcher selbsttragenden Strukturen unter äußeren Lasten führt unabhängig von den Symmetrieeigenschaften zu einachsigen Belastungen der Zugelemente, welche durch optische Fasern realisiert sein können.

In der Literatur wurde der o. g. multifunktionale Einsatz faseroptischer Sensoren als Zugelemente von Tensegrity-Strukturen bereits theoretisch aufgezeigt [7]. Die genannte Literaturquelle beschreibt eine Struktur, bestehend aus starren stabförmigen Druckelementen und sensorischen Zugelementen, mithilfe derer aus Dehnungsinformationen auf drei orthogonale Komponenten einer äußeren Kraft sowie eines äußeren Moments zurückgerechnet werden kann. Ein derartiger Sensoraufbau bietet Vorteile im Hinblick auf den Leichtbau, die Miniaturisierbarkeit, die Reduzierung der mechanischen Modellkomplexität sowie die Möglichkeit der Form- und Steifigkeitsänderung durch Änderung des Vorspannungszustands.

Das in [7] vorgeschlagene Sensorkonzept besitzt somit eine Reihe vorteilhafter Eigenschaften, weist jedoch durch eine hohe Komponentenanzahl (18 optische Fasern und 6 Druckelemente) eine erhöhte Modellkomplexität auf. Dies ist insbesondere im Hinblick auf die praktische Realisierbarkeit problematisch. Zudem sind einige Druckelemente über Kugelgelenke direkt miteinander verbunden, in denen bei einer Verformung der Struktur eine Energiedissipation durch Reibungsverluste erfolgt und somit die Messergebnisse beeinflusst werden.

Basierend auf einer Literaturrecherche ist [7] die einzige den Antragstellern bekannte Quelle, welche die beschriebene multifunktionale Verwendung optischer Fasern zur Realisierung eines Tensegrity-ähnlichen Sensorsystems vorschlägt. Weitere sensorisierte Tensegrity-Strukturen wurden z. B. als Lokomotionssysteme, Aktuatoren oder nachgiebige Gelenke realisiert [8-13]. Die sensorischen Informationen werden dabei unter anderem über Motordrehgeber oder Kraftsensoren mittels Dehnungsmessstreifen gewonnen, sodass die genannten Vorteile faseroptischer Sensoren ungenutzt bleiben [8].

Zusammenfassend sind also folgende Nachteile der aus dem Stand der Technik bekannten Tensegrity-Sensorvorrichtungen zu nennen:
Die Sensorvorrichtungen weisen eine komplexe Struktur auf, umfassend eine unhandlich große Anzahl eindimensionaler Druckelemente, die über eine mehrfache Anzahl von sensorisch ausgeführten Zugelementen verbunden sind. Die Druckelemente weisen ein Kugelgelenk zur Anbindung an eine starre Basiselement bzw. ein starres Deckelement auf, in welchen eine reibungsbedingte Dissipation von Energie erfolgt, wodurch Messwerte von Kräften und Momenten verfälscht werden.

Somit ist die Fertigung dieser Sensorvorrichtungen aufwendig und teuer. Die gewonnenen Messwerte können eine reduzierte Zuverlässigkeit aufweisen.

### Aufgabe der Erfindung

Der vorgestellten Erfindung liegt die Aufgabe zugrunde, die Nachteile der aus dem Stand der Technik bekannten Sensorvorrichtungen zur Ermittlung einer äußeren Kraft zu überwinden. Insbesondere ist die Komplexität des Aufbaus der Sensorvorrichtungen gegenüber dem in [7] vorgestellten Konzept wesentlich zu verringern und die Zuverlässigkeit der Messung äußerer Kräfte zu steigern.

### Lösung der Aufgabe

Erfindungsgemäß gelingt die Lösung dieser Aufgabe mit den Merkmalen der Ansprüche 1, 12 und 13. Vorteilhafte Ausgestaltungen sind in den Unteransprüchen angegeben.

### Detaillierte Beschreibung der Lösung

Die erfindungsgemäße Sensorvorrichtung zur Ermittlung einer äußeren Kraft weist zwei dreidimensional ausgedehnte Starrkörper auf. Einer der beiden Starrkörper ist gestellfest, der andere Starrkörper ist nicht-gestellfest. Ausführungsformen des Gestells sind einem auf die Kraftmess- und Wägetechnik spezialisierten Fachmann bekannt. Das Gestell kann beliebig orientiert, ruhend oder beweglich sein, beispielsweise kann es an einen Roboter angebunden sein. Die beiden Starrkörper weisen eine beliebig wählbare Freiform auf.

Diese Freiform kann z. B. durch einen Kompaktkörper, aus dem mindestens ein Ausleger herausgeführt ist, gebildet werden. Der Kompaktkörper und der Ausleger sind integrale Bestandteile des Starrkörpers, d. h., sie bilden einen einzigen, integralen Starrkörper.

Die Ausleger weisen eine bogenförmige Gestalt auf, wobei der Begriff "bogenförmig" breit aufzufassen ist. Es kann sich um Rundbögen handeln, die zwei Anbindungen an einen Starrkörper aufweisen und von der einen Anbindung zunächst in Richtung des anderen, gegenüberliegenden Starrkörpers und dann zurück zur zweiten Anbindung verlaufen.

Ebenso sind Teilbögen möglich. Die Rund- und Teilbögen können einen kreisförmigen Verlauf haben, jedoch sind auch Abweichungen von diesem Verlauf möglich, z. B. in Form von Ellipsensegmenten. Die Teilbögen können z. B. auch die Form eines großen "L" mit eckiger Form oder eines kleinen "I" mit abgerundeter Form haben.

Der Kompaktkörper kann fließend in den Ausleger übergehen, sodass der Starrkörper z. B. eine löffelartige Form erhält.

Der nicht-gestellfeste Starrkörper weist eine Messoberfläche auf, die zur Einleitung einer äußeren Kraft an einem beliebigen Angriffspunkt auf dieser Messoberfläche geeignet ist. Diese Messoberfläche kann eine Freiformfläche sein, z. B. eine ebene Freiformfläche (z. B. Kreis, Ellipse, Polygon) oder eine räumliche Freiformfläche (z. B. Kugel- oder Ellipsoidoberfläche). Die Messoberfläche kann sich in einem beliebigen Oberflächenbereich des Starrkörpers befinden (oben, unten, seitlich).

Der nicht-gestellfeste Starrkörper erstreckt sich, vorzugsweise über einen Ausleger, in Richtung des gestellfesten Starrkörpers. Der gestellfeste Starrkörper erstreckt sich, vorzugsweise über einen Ausleger, in Richtung des nicht-gestellfesten Starrkörpers. Beide Starrkörper sind vorzugsweise identisch, also kongruent, ausgeführt. Sie sind, vorzugsweise über ihre Ausleger, aneinander vorbeigeführt oder greifen ineinander, ohne sich zu berühren. Die beiden Starrkörper sind indirekt über mindestens drei Zugelemente, die beide Starrkörper bei Abwesenheit einer äußeren Kraft beabstandet in einem Referenzzustand halten, in dem alle Zugelemente vorgespannt sind, miteinander verbunden. Indirekte Verbindung der Starrkörper bedeutet hier, dass zwischen den beiden Starrkörpern keine direkte starre oder gelenkige Verbindung besteht. Die Anbindungen der Zugelemente an die Starrkörper werden als Knotenpunkte bezeichnet. Jedes Zugelement verläuft von einem Knotenpunkt des einen Starrkörpers zu einem Knotenpunkt des anderen Starrkörpers. Alle Zugelemente sind elastisch. Ihre Vorspannung ist einstellbar. Mindestens ein Zugelement ist aktiv einstellbar, d. h., dass seine Länge manuell oder über einen Aktuator einstellbar ist (aktiv einstellbares Zugelement). Jedes aktiv einstellbare Zugelement beinhaltet ein Mittel zur Einstellung seiner Länge. Eine Längenänderung mindestens eines aktiv einstellbaren Zugelements überträgt sich über die Starrkörper auf andere aktive Zugelemente und auf passiv einstellbare Zugelemente, die keine Mittel zur Einstellung ihrer Länge aufweisen. Die Vorspannung der passiven Zugelemente ist somit änderbar, ohne dass ein manueller oder mechanischer Zugriff auf sie erfolgt. Die Änderung mindestens eines aktiv einstellbaren Zugelements führt zu einer Änderung des Zustands der Gesamtstruktur und damit zu einer Änderung des Zustands anderer aktiv oder passiv einstellbarer Zugelemente. Alle oder ausgewählte passiv oder aktiv einstellbare Zugelemente sind teilweise oder vollständig als sensorfähige optische Fasern ausgeführt. Diese Zugelemente werden als sensorische Zugelemente bezeichnet. Vorzugsweise sind alle oder ausgewählte der passiv einstellbaren Zugelemente als sensorische Zugelemente ausgeführt. Die optische Faser dient sowohl als Messmittel als auch als tragendes Bauelement, weist also eine Multifunktionalität auf. Um ihre tragende Wirkung zu realisieren, ist die optische Faser zum Zwecke der Fixierung an den Knotenpunkten geklemmt, verklebt, aufgewickelt oder auf eine andere Weise befestigt. Alle oder ausgewählte der als sensorfähige optische Fasern ausgeführten Zugelemente können vorzugsweise über eine einzige, durchlaufende, an den Knotenpunkten fixierte Faser realisiert sein, sodass ein eingekoppeltes Lichtsignal die so miteinander verbundenen Zugelemente seriell durchlaufen kann. In diesem Fall ist es vorteilhaft, die Knotenpunkte mit hinreichend großen Biegeradien auszuführen, um die Faser vor Beschädigung zu schützen. Die optische Faser jedes sensorischen Zugelements ist mit mindestens zwei beabstandeten Reflexionselementen ausgestattet, an denen ein eingekoppeltes Lichtsignal teilweise reflektiert wird. Als Reflexionselemente können auch die Schnittflächen am Anfang und Ende der optischen Fasern verwendet werden.

Für den Anwendungsfall als Wägevorrichtung ist die Sensorvorrichtung als aufrechtstehende Sensorvorrichtung ausgeführt, d. h., sie ist so positioniert, dass die Schwerkraft vom nicht-gestellfesten zum gestellfesten Starrkörper gerichtet ist. Vorzugsweise besitzt der nicht-gestellfeste Starrkörper dieser Sensorvorrichtung eine ebene Messoberfläche, die im Referenzzustand senkrecht zur Schwerkraft ausgerichtet ist, d. h., der Normalenvektor der ebenen Messoberfläche und der Vektor der Schwerkraft verlaufen parallel.

Bei Anwendungen als Kraftmesseinrichtung für beliebige Kräfte kann die Sensorvorrichtung in beliebiger Orientierung an einem beliebig orientierten Gestell befestigt sein.

Die Starrkörper können einer komplexen Belastung, die sich aus Zug-, Druck-, Biege- und Scherbelastungen zusammensetzt, standhalten. Die Maximalwerte dieser komplexen Belastung werden so gewählt, dass die Starrkörper unter den von dieser Anmeldung umfassten Messbedingungen als ideal starr zu betrachten sind.

Nachfolgend wird die Erfindung unter Bezugnahme auf die beigefügten Zeichnungen in mehreren Ausführungsbeispielen näher erläutert.

### Kurze Beschreibung der Zeichnungen

Die Figuren zeigen folgende Prinzipdarstellungen:
- Fig. 1 -: Ausführungsform S der Sensorvorrichtung im Referenzzustand
- Fig. 2 -: Realisierungs- und Änderungsmöglichkeit des Vorspannungszustandes
- Fig. 3 -: Sensorvorrichtung S im verformten Zustand
- Fig. 4 -: Ein durch eine optische Faser realisiertes Zugelement (sensorisches Zugelement)
- Fig. 5 -: Reihenschaltung einer optischen Faser mit einem weiteren elastischen Zugelement
- Fig. 6 -: Realisierung mehrerer Zugelemente mit einer einzigen, durchlaufenden optischen Faser F
- Fig. 7 -: Alternative Ausführungsform A der Sensorvorrichtung mit nicht-parallelen Zugelementen
- Fig. 8 -: Alternative Ausführungsform B der Sensorvorrichtung mit nicht-parallelen Zugelementen
- Fig. 9 -: Alternative Realisierung der Vorspannung durch Schwerpunktverlagerung
- Fig. 10 -: Ausführungsform mit elastischem Biegeelement
- Fig. 11 -: Ausführungsform mit einem Taster zur Kraftaufnahme und -weiterleitung

### Ausführungsbeispiel 1

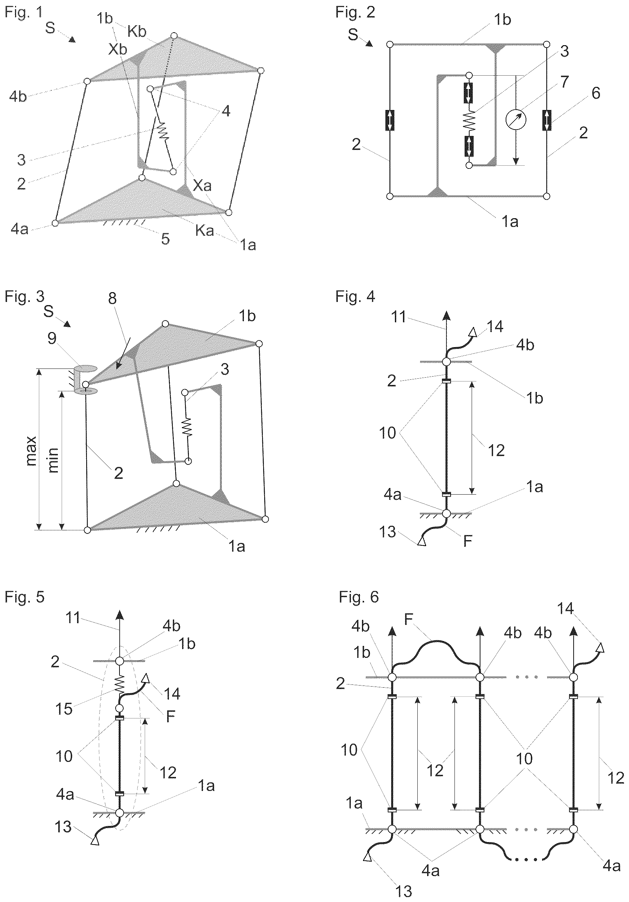

Die in Fig. 1 schematisch dargestellte erfindungsgemäße Sensorvorrichtung S zur Ermittlung einer äußeren Kraft beinhaltet zwei Starrkörper 1a, 1b mit ebenen Oberflächen. Der Starrkörper 1a ist gestellfest. Die gestellfeste Anbindung 5 ist angedeutet. Der Starrkörper 1b ist nicht-gestellfest. Beide Starrkörper sind gebildet aus einem Kompaktkörper Ka, Kb, aus dem ein L-förmiger Ausleger Xa, Xb herausgeführt ist. Die Kompaktkörper Ka, Kb sind kongruent und weisen die Form eines dreieckigen Prismas auf, das in Fig. 1 vereinfacht mit verschwindender Dicke dargestellt ist. Die dreieckige Deckfläche des nicht-gestellfesten Starrkörpers 1b ist als Messoberfläche für die Einleitung einer zu ermittelnden äußeren Kraft vorgesehen. Beide Starrkörper 1a, 1b sind indirekt mit drei passiv einstellbaren Zugelementen 2 an den Knotenpunkten 4a, 4b derart miteinander verbunden, dass im Zusammenwirken mit einem aktiv einstellbaren Zugelement 3, welches die Ausleger Xa, Xb verbindet, ein stabiler Gleichgewichtszustand erreicht wird. Im Referenzzustand, d. h. bei Abwesenheit einer äußeren Kraft, sind die ebenen Oberflächen beider Starrkörper parallel zueinander ausgerichtet.

Alle Zugelemente 2, 3 sind elastisch und vorgespannt. Ihre Vorspannung ist einstellbar. Die drei passiv einstellbaren Zugelemente 2 sind als optische Fasern, also als sensorische Zugelemente, ausgeführt. Das aktiv einstellbare Zugelement 3 ist als nicht-sensorisches Zugelement ausgeführt. Die optischen Fasern dienen sowohl als Messmittel als auch als tragende Bauelemente, weisen also eine Multifunktionalität auf. Um ihre tragende Wirkung zu realisieren, sind die optischen Fasern an den Knotenpunkten 4a, 4b fixiert.

Der stabile Gleichgewichtszustand der Sensorvorrichtung S und die Vorspannung aller Zugelemente 2, 3 im Referenzzustand werden gewährleistet durch das Zusammenwirken der passiv einstellbaren Zugelemente 2 mit dem aktiv einstellbaren Zugelement 3, das an die beiden Ausleger Xa, Xb angebunden ist. Ausleger Xa ist an den gestellfesten Starrkörper 1a starr angebunden und zum nicht-gestellfesten Starrkörper 1b gerichtet, ohne diesen zu erreichen. Ausleger Xb ist an den nicht-gestellfesten Starrkörper 1b starr angebunden und zum gestellfesten Starrkörper 1a gerichtet, ohne diesen zu erreichen. Die Ausleger Xa, Xb weisen eine so große Ausladung in Richtung des gegenüberliegenden Starrkörpers 1b, 1a auf, dass sie in einem Teilbereich aneinander vorbeigeführt sind. Das aktiv einstellbare Zugelement 3 ist an jeweils einen Knotenpunkt 4 der Ausleger Xa, Xb so angebunden, dass es diesen Teilbereich durchläuft. Das aktiv einstellbare Zugelement 3 bildet somit eine indirekte Verbindung der Starrkörper 1a und 1b. Es ist, wie Fig. 2 zeigt, als nicht-sensorische Feder mit einstellbarer Länge 7 ausgeführt und erlaubt die Einstellung der Vorspannung 6 der passiv einstellbaren Zugelemente 2. (Die in Figs. 2, 9 und 10 mit 6 bezeichneten Rechtecke mit Pfeilen sind keine separaten Bauelemente, sondern symbolisieren, dass das jeweilige Zugelement eine einstellbare Zugspannung aufweist. In Fig. 2 verdeckt das links dargestellte Zugelement 2 ein anderes Zugelement 2.) Eine Verringerung der Länge 7 führt zu einer Vergrößerung des Abstandes der Starrkörper 1a, 1b und damit zu einer Erhöhung der Vorspannung 6 der passiv einstellbaren Zugelemente 2. Entsprechend führt eine Vergrößerung der Länge 7 zu einer Verkleinerung des Abstandes der Starrkörper 1a, 1b und damit zu einer Verringerung der Vorspannung 6 der passiv einstellbaren Zugelemente 2. Der Vorspannungszustand der passiv einstellbaren Zugelemente 2 ist somit mithilfe des aktiv einstellbaren Zugelements 3 definiert einstellbar und änderbar. Somit kann der Referenzzustand der Sensorvorrichtung durch Änderung des Vorspannungszustands der passiv einstellbaren Zugelemente 2 optimal an die jeweilige Messaufgabe angepasst werden.

Die Änderung des Vorspannungszustandes im Referenzzustand erlaubt
- die Anpassung des Messbereichs einer zu ermittelnden äußeren Kraft durch Realisierung eines neuen Gleichgewichtszustands der Sensorvorrichtung,
- die Anpassung der Messauflösung einer zu ermittelnden äußeren Kraft durch Änderung der Gesamtsteifigkeit der Sensorvorrichtung.

Die Ermittlung einer äußeren Kraft mit der Sensorvorrichtung S läuft wie folgt ab: Ausgehend vom vorgespannten Referenzzustand wird der nicht-gestellfeste Starrkörper 1b der Sensorvorrichtung mit einer zu bestimmenden äußeren Kraft 8 belastet. Die äußere Kraft 8 führt zu einer Längenänderung der sensorischen passiv einstellbaren Zugelemente 2 und somit zu einer Längenänderung der optischen Faser in diesen Zugelementen. Das führt zu einem vom Referenzzustand in Fig. 1 verschiedenen verformten Zustand, der in Fig. 3 schematisch dargestellt ist. Es gibt Mittel zur Beschränkung des Arbeitsbereichs, z. B. mechanische Anschläge 9, die für die passiv einstellbaren Zugelemente eine maximale Länge max und eine minimale Länge min vorgeben. Sie können vor und/oder während jeder Messung verschoben werden und gewährleisten, dass
- alle Zugelemente 2, 3 stets gespannt bleiben,
- die maximal zulässigen Spannungen in den Zugelementen 2, 3 nicht überschritten werden (Überlastschutz).

In Fig. 4 ist ein als sensorfähige optische Faser ausgeführtes passiv einstellbares Zugelement 2, vgl. Fig. 1, schematisch im Detail dargestellt. Die Faser F ist zum Zwecke der Fixierung an den Knotenpunkten 4a, 4b geklemmt, verklebt oder aufgewickelt. Der zwischen den Starrkörpern 1a, 1b liegende Teil der Faser F beinhaltet mindestens zwei Reflexionselemente 10. Aufgrund der Elastizität der Faser F dehnt sich diese unter Einwirkung einer Zugkraft 11 aus, was zu einer messbaren Änderung der optischen Pfadlänge 12 zwischen den Reflexionselementen 10 führt, die detektiert wird. Ein- und Ausgang der optischen Faser sind mit 13 bzw. 14 bezeichnet.

Die detektierten Änderungen der optischen Pfadlänge lassen Rückschlüsse auf die Änderungen der Kräfte in den Fasern zu. Durch ergänzende Differenzbetrachtung der mechanischen Gleichgewichtsbedingungen im Referenzzustand und im verformten Zustand ist die Sensorvorrichtung je nach Ausführungsart (Anzahl der durch optische Fasern realisierten Zugelemente) geeignet zur Rückrechnung auf
1. den Betrag der äußeren Kraft,
2. die Richtung der äußeren Kraft,
3. den Angriffspunkt der äußeren Kraft.

Die Berechnungsverfahren können computergestützt sein.

Einen möglichen praktischen Anwendungsfall stellt somit die Aufgabe dar, die Gewichtskraft einer auf der Messoberfläche des nicht-gestellfesten Starrkörper 1b abgelegten Masse sowie deren Schwerpunktposition innerhalb der Messoberfläche zu bestimmen. Die Informationen über die Schwerpunktposition der Masse können bei Kenntnis der Ecklastabhängigkeit der Sensorvorrichtung zur mathematischen Kompensation durch Korrekturfaktoren herangezogen werden. Einen weiteren Anwendungsfall stellt die Realisierung eines 3D-Kraftsensors für die Robotik dar.

Die in Fig. 4 dargestellten, als optische Fasern ausgeführten, passiv einstellbaren Zugelemente 2 können besondere Ausführungsformen aufweisen, die in Fig. 5 und 6 aufgezeigt sind. In Fig. 5 ist die optische Faser F mit einem weiteren elastischen Zugelement, einer Zugfeder 15, in serieller Anordnung, also in Reihenschaltung, verbunden, um die Gesamtsteifigkeit des resultierenden Zugelements 2 zu reduzieren und größere Zugverformungen desselben zu ermöglichen. In Fig. 6 sind mehrere passiv einstellbare Zugelemente 2 durch eine einzige, durchlaufende, mehrfach mit Reflexionselementen 10 versehene und an den Starrkörper-Knotenpunkten 4a, 4b fixierte optische Faser F mit nur einem Eingang 13 und Ausgang 14 realisiert. Die zwischen zwei passiv einstellbaren Zugelementen 2 befindlichen Abschnitte der durchlaufenden optischen Faser F können gespannt oder auch ungespannt sein, was durch einen wellenförmigen Verlauf angedeutet ist. In der Anordnung gemäß diesem Ausführungsbeispiel erstreckt sich die durchlaufende optische Faser F über drei passiv einstellbare Zugelemente 2. Sie kann sich jedoch über beliebig viele passiv einstellbare Zugelemente 2 erstrecken, was durch den unterbrochenen wellenförmigen Verlauf angedeutet ist. Es sind beliebige Kombinationen der Realisierungsmöglichkeiten aus Fig. 4-6 ausführbar.

### Ausführungsbeispiel 2

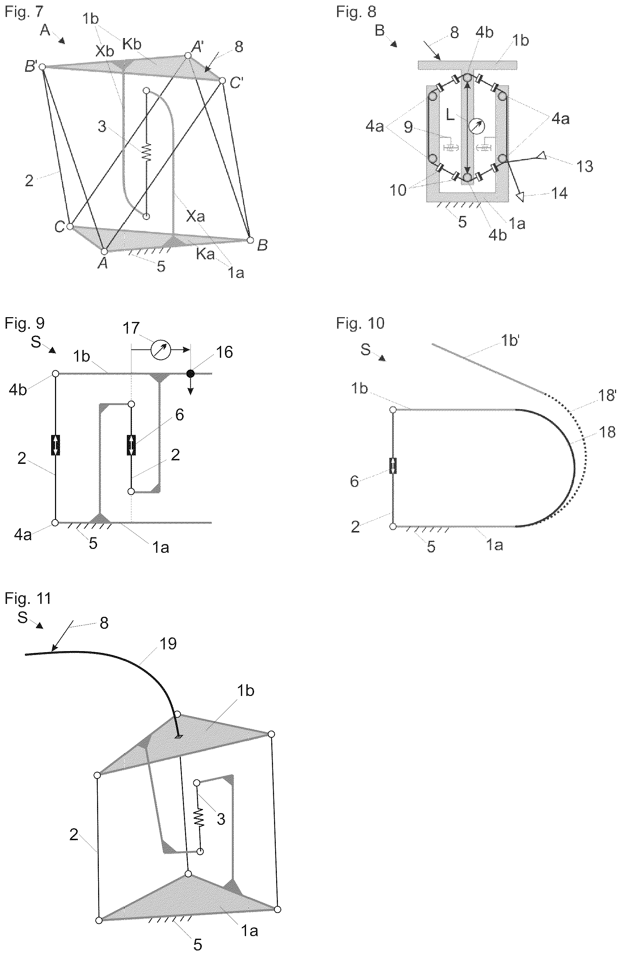

Fig. 7 zeigt eine alternative Ausführungsform A der Sensorvorrichtung, bei der die passiv einstellbaren Zugelemente 2 nicht (wie in der vorab beschriebenen Ausführungsform S gemäß Fig. 1) parallel gerichtet sind, sondern nicht-parallel, ähnlich wie in einer Stewarf/Gough-Plattform, verschaltet sind.

Die Ausführungsform A weist eine Reihe gemeinsamer Merkmale mit der Ausführungsform S auf: Sie umfasst einen gestellfesten Starrkörper 1a und einen nicht-gestellfesten Starrkörper 1b, die jeweils gebildet sind aus einem Kompaktkörper Ka, Kb, aus dem ein Ausleger Xa, Xb herausgeführt ist. Hinsichtlich der Ausführung der Kompaktkörper Ka, Kb sei auf Ausführungsbeispiel 1 verwiesen. Die Ausleger Xa, Xb weisen hier eine abgerundete Form (kleines I) auf, im Gegensatz zur Ausführungsform S, die Ausleger mit eckiger Form (großes L) aufweist. Dieser Unterschied bedingt aber keine Änderung ihrer Funktionalität.

Im Referenzzustand befindet sich die Sensorvorrichtung A in einem zentralsymmetrischen Gleichgewichtszustand. Dieser Gleichgewichtszustand wird gewährleistet durch das Zusammenwirken der passiv einstellbaren Zugelemente 2 mit dem aktiv einstellbaren Zugelement 3, das in derselben Weise wie in Ausführungsbeispiel 1 beschrieben an die beiden Ausleger Xa, Xb angebunden ist. Die beiden Starrkörper 1a, 1b sind hier über sechs passiv einstellbare Zugelemente 2 verbunden, wobei jedes Zugelement 2 an einem Knotenpunkt am gestellfesten Starrkörper 1a und an einem Knotenpunkt am nicht-gestellfesten Starrkörper 1b angebunden ist. Alle Zugelemente 2, 3 sind vorgespannt.

Um die Anordnung der passiv einstellbaren Zugelemente 2 genauer zu beschreiben, werden die einander entsprechenden Ecken der dreieckigen Oberflächen mit A, A'; B, B'; C, C' bezeichnet. Passiv einstellbare Zugelemente 2 verlaufen nun von einem Knotenpunkt im Bereich einer Ecke des gestellfesten Starrkörpers 1a zu Knotenpunkten in den Bereichen der mit ungleichen Buchstaben bezeichneten Ecken des nicht-gestellfesten Starrkörpers 1b. Somit erstrecken sich die sechs äußeren/peripheren Zugelemente 2 zwischen folgenden Eckbereichen: A-B', A-C', *B-A*', *B-C*', C-A', C-8'. Im Übrigen entspricht die Funktionsweise dieser Ausführungsform A der Funktionsweise der oben beschriebenen Ausführungsform S. Auch bei Ausführungsform A ist der Vorspannungszustand der passiv einstellbaren Zugelemente 2 mithilfe des aktiv einstellbaren Zugelements 3 definiert einstellbar und änderbar, sodass der Referenzzustand der Sensorvorrichtung A durch Änderung des Vorspannungszustands der passiv einstellbaren Zugelemente 2 optimal an die zu lösende Messaufgabe angepasst werden kann. Natürlich können auch alle in Fig. 4-6 beschriebenen Ausführungsformen der passiv einstellbaren Zugelemente 2 zum Einsatz kommen.

### Ausführungsbeispiel 3

In Fig. 8 ist eine weitere Ausführungsform B der Sensorvorrichtung mit einem U-förmigen und einem T-förmigen Starrkörper und einer einzigen mehrfach mit Reflexionselementen 10 versehenen und an den Knotenpunkten 4a, 4b zum Zwecke der Fixierung aufgewickelten Faser mit einem Eingang 13 und einem Ausgang 14 dargestellt. Der U-förmige Starrkörper ist unbeweglich und entspricht damit einem gestellfesten Starrkörper 1a. Der T-förmige Starrkörper ist beweglich und entspricht damit einem nicht-gestellfesten Starrkörper 1b. Er kann für Montage- und Transportzwecke mittels angedeuteter Schraubklemmen 9, die einem Anschlag 9 in Fig. 3 entsprechen, fixiert werden. Der T-förmige Starrkörper 1b ist ausfahrbar ausgeführt, sodass der Abstand L der beiden auf ihm angeordneten Knotenpunkte 4b änderbar ist, wodurch die Zugspannung in den mit Reflexionselementen 10 ausgestatteten Faserabschnitten einstellbar ist, was eine für die zu lösende Messaufgabe optimale Einstellung des Referenzzustands der Sensorvorrichtung B erlaubt.

### Weitere vorteilhafte Ausgestaltungen der Erfindung

Insbesondere können nichtlineare elastische Eigenschaften der nicht-sensorischen Zugelemente gezielt zur Steifigkeitsänderung durch Änderung des Vorspannungszustandes ausgenutzt werden.

Die Vorspannung der Sensorvorrichtung kann alternativ, wie oben mit Bezug auf Fig. 8 erläutert, durch Änderung der Starrkörpergeometrie (z. B. Ausfahren einer Teleskopstange) oder durch eine geeignete Schwerpunktlage in der Vorrichtung realisiert sein und durch eine Schwerpunktverlagerung geändert werden. Dazu kann, wie in Fig. 9 dargestellt, ein Gegengewicht 16, das als Schubelement realisiert sein kann, um eine Länge 17 verschoben werden. Die Vorrichtung gemäß Fig. 9 weist eine geringere Anzahl von Zugelementen auf und ist daher besonders einfach aufzubauen. In Fig. 9 verdeckt das links dargestellte Zugelement 2 ein anderes Zugelement 2.

Die in Fig. 3 dargestellten Mittel 9 zur Realisierung eines Überlastschutzes können zusätzlich genutzt werden, um die Notwendigkeit der Messbereichs-/Steifigkeitsänderung z. B. mittels elektrischer Kontakte zu detektieren. Unter Berücksichtigung der Kontaktinformationen können Messbereich und Steifigkeit nicht nur vor Belastung der Sensorvorrichtung (im Referenzzustand), sondern auch im belasteten Zustand kontinuierlich geändert werden.

Die beiden Starrkörper 1a, 1b können statt durch Zugelemente durch andere elastische Elemente (z. B. ein Biegeelement) verbunden sein, siehe Fig. 10. In Fig. 10 ist die Vorspannung der Sensorvorrichtung S durch das Biegeelement 18 realisiert. Der spannungsfreie Zustand des Biegeelements 18 und des daran angebundenen nicht-gestellfesten Starrkörpers 1b ist angedeutet und mit 18' bzw. 1b' bezeichnet. Das Biegeelement ersetzt dabei mindestens zwei Zugelemente.

Die Sensorvorrichtung kann um einen oder mehrere Taster 19 (starr oder elastisch) zur Aufnahme und Weiterleitung einer äußeren Kraft 8 erweitert werden, siehe Fig. 11. Die Taster werden mit dem nicht-gestellfesten Starrkörper 1b starr verbunden und können auf diesem unterschiedlich positioniert werden. Sie können selbst als optische Faser realisiert oder anderweitig sensorisiert werden, aber auch nicht-sensorisch sein. Verschiedene Tastergeometrien sind denkbar, z. B. lange schlanke Kraftaufnehmer mit und ohne Vorkrümmung, aber auch solche mit gekrümmten Oberflächen, z. B. sphärische Taster. So kann, wie in Fig. 11 gezeigt, ein langer, schlanker Taster 19 zur Kraftaufnahme in schwer zugänglichen Bereichen verwendet werden. Außerdem ist es möglich, Hinweise auf die Form und Entfernung der Objekte sowie Informationen über deren Bewegung und Geschwindigkeit zu erhalten.

### Einsetzbare Materialien und Fertigungsverfahren

Dem Fachmann sind eine Vielzahl von Materialien, die zur Fertigung der Komponenten der Sensorvorrichtung geeignet sind, bekannt. Die Starrkörper können aus Metall, Kunststoff, Holz und weiteren Materialien gefertigt werden. Dafür können verschiedene spanende und nichtspanende Verfahren wie Fräsen, Gießen, Sägen und Schneiden eingesetzt werden. Aufgrund der komplexen Struktur der Starrkörper sind additive Herstellungsverfahren (3D-Druck) besonders vorteilhaft. Je nach Anwendungsfall ist ein Material auszuwählen, das einen guten Kompromiss zwischen Härte, Festigkeit, Dichte und Kosten bietet. Im Bereich der Metalle stehen dem Fachmann z. B. Hartmetall (WC/Co-Verbunde) mit optimaler Starrheit, kostengünstiger Stahl, hochfestes Titan und leichtes Magnesium sowie weitere Metalle und Metalllegierungen zur Verfügung.

Die nicht-sensorischen Zugelemente oder nicht-sensorischen Abschnitte von Zugelementen können z. B. durch Metall- oder Kunststoffdrähte, elastische Bänder, Metall- oder Kunststofffedern gebildet werden.

### Vorteile der Erfindung

Die Erfindung stellt eine selbsttragende Sensorvorrichtung für die Kraftmess- und Wägetechnik bereit, deren Komplexität gegenüber den aus dem Stand der Technik bekannten Sensorvorrichtungen herabgesetzt ist und die damit Vorteile hinsichtlich der praktischen Realisierbarkeit aufweist, sodass sie kostengünstiger und einfacher herstellbar und zugleich robuster und weniger fehleranfällig ist. Sie kann in beliebiger Orientierung an ein ruhendes oder bewegtes Gestell angebunden sein und ist somit in der Wägetechnik und der Robotik universell einsetzbar. Trotz der herabgesetzten Komplexität der Sensorvorrichtung bleiben die Einstellbarkeit des Messbereichs und der Messauflösung einer Kraft erhalten.

Gegenüber den aus dem Stand der Technik bekannten Sensorvorrichtungen ist die Zahl der sensorisch ausgeführter Zugelemente reduziert, sodass weniger Parameter zu messen und auszuwerten sind, um mit dem angegebenen erfindungsgemäßen Verfahren den Betrag, die Richtung und den Angriffspunkt einer äußeren Kraft mit höherer Zuverlässigkeit zu ermitteln.

Die Aufgaben der Erfindung wurden somit in vollem Umfang gelöst.

### Zitierte Literatur

[1] Kissinger, T., Correia, R., Charrett, T. O., James, S. W., Tatam, R. P. (2016). Fiber segment interferometry for dynamic strain measurements. Journal of Lightwave Technology, 34(19), 4620-4626.
[2] Ma, G., Mao, N., Li, Y., Jiang, J., Zhou, H., Li, C. (2016). The reusable load cell with protection applied for online monitoring of overhead transmission lines based on fiber Bragg grating. Sensors, 16(6), 922.
[3] Vijayan, A., Gawli, S., Kulkarni, A., Karekar, R. N., Aiyer, R. C. (2008). An optical fiber weighing sensor based on bending. Measurement Science and Technology, 19(10), 105302.
[4] Fajkus, M., Nedoma, J., Martinek, R., Danys, L., Fridrich, M., Mec, P., Zabka, S. (2021). Fiber-optic Bragg system for the dynamic weighing of municipal waste: A pilot study. IEEE Access, 9, 99050-99059.
[5] The International Recommendation of Legal Metrology (OIML R 76-1), 2006.
[6] Buckminster, F. R. (1962). U.S. Patent No. 3,063,521. Washington, DC: U.S. Patent and Trademark Office.
[7] Sultan, C., Skelton, R. (2004). A force and torque tensegrity sensor. Sensors and Actuators A: Physical, 112(2-3), 220-231.
[8] Bruce, J., Caluwaerts, K., Iscen, A., Sabelhaus, A. P., SunSpiral, V. (2014, May). Design and evolution of a modular tensegrity robot platform. In 2014 IEEE International Conference on Robotics and Automation (ICRA), 3483-3489.
[9] Barkan, A. R., Padmanabha, A., Tiemann, S. R., Lee, A., Kanter, M. P., Agarwal, Y. S., Agogino, A. M. (2021, May). Force-sensing tensegrity for investigating physical humanrobot interaction in compliant robotic systems. In 2021 IEEE International Conference on Robotics and Automation (ICRA), 3292-3298.
[10] Sabelhaus, A. P., Bruce, J., Caluwaerts, K., Manovi, P., Firoozi, R. F., Dobi, S., SunSpiral, V. (2015, May). System design and locomotion of SUPERball, an untethered tensegrity robot. In 2015 IEEE international conference on robotics and automation (ICRA), 2867-2873.
[11] Agogino, A. K., SunSpiral, V., Atkinson, D. (2018). Super Ball Bot-structures for planetary landing and exploration (No. HQ-E-DAA-TN631 11).
[12] Li, W. Y., Takata, A., Nabae, H., Endo, G., Suzumori, K. (2021). Shape recognition of a tensegrity with soft sensor threads and artificial muscles using a recurrent neural network. IEEE Robotics and Automation Letters, 6(4), 6228-6234.
[13] Friesen, J. M., Dean, J. L., Bewley, T., Sunspiral, V. (2018, May). A tensegrity-inspired compliant 3-DOF compliant joint. In 2018 IEEE International Conference on Robotics and Automation (ICRA), 3301-3306.

## Patentansprüche

1. Sensorvorrichtung (S, A, B) zur Ermittlung einer äußeren Kraft (8) und ihres Angriffspunkts, aufweisend einen dreidimensional ausgedehnten gestellfesten Starrkörper (1a) und einen dreidimensional ausgedehnten nicht-gestellfesten Starrkörper (1b), die an Knotenpunkten (4, 4a, 4b) über mindestens drei vorgespannte Zugelemente (2, 3), die beliebig als aktiv einstellbare Zugelemente (3) oder passiv einstellbare Zugelemente (2) realisiert sein können und die sensorisch oder nicht-sensorisch ausgeführt sein können, indirekt miteinander verbunden sind, wobei jedes sensorische Zugelement mindestens zwei beabstandete Reflexionselemente (10) aufweist und jedes aktiv einstellbare Zugelement (3) ein Mittel zur aktiven Einstellung seiner Vorspannung (6) aufweist.

2. Sensorvorrichtung (S, A, B) nach Anspruch 1, **gekennzeichnet durch** eine als ebene oder räumliche Freiformfläche ausgebildete Messoberfläche am nicht-gestellfesten Starrkörper (1b), die zur Einleitung der äußeren Kraft (8) an einem beliebigen Angriffspunkt auf der Messoberfläche ausgelegt ist.

3. Sensorvorrichtung (S, A, B) nach Anspruch 1 oder 2, **dadurch gekennzeichnet, dass** durch Änderung ihres Vorspannungszustands in einem Referenzzustand eine Anpassung des Messbereichs und der Messauflösung der zu ermittelnden äußeren Kraft (8) realisierbar ist.

4. Sensorvorrichtung (S, A, B) nach Anspruch 3, **dadurch gekennzeichnet, dass** die Änderung des Vorspannungszustands unter Ausnutzung nichtlinearer Eigenschaften der Zugelemente (2, 3) realisierbar ist.

5. Sensorvorrichtung (S, A, B) nach einem der Ansprüche 1 bis 4, **dadurch gekennzeichnet, dass** die sensorisch ausgeführten Zugelemente durch eine Reihenschaltung einer optischen Faser mit einem weiteren elastischen Zugelement (15) realisiert sind.

6. Sensorvorrichtung (S, A, B) nach einem der Ansprüche 1 bis 5, **dadurch gekennzeichnet, dass** die sensorischen Zugelemente durch eine einzige, durchlaufende optische Faser mit nur einem Eingang (13) und nur einem Ausgang (14) realisiert sind.

7. Sensorvorrichtung (S, A, B) nach einem der Ansprüche 1 bis 6, **gekennzeichnet durch** Mittel zur Anzeige und/oder Beschränkung des Messbereichs und zum Überlastschutz, ausführbar als mechanische Anschläge (9), die für die passiv einstellbaren Zugelemente (2) eine maximale Länge (max) und eine minimale Länge (min) vorgeben.

8. Sensorvorrichtung (S, A, B) nach einem der Ansprüche 1 bis 7, **dadurch gekennzeichnet, dass** ihr Vorspannungszustand durch eine Änderung der Geometrie der Starrkörper (1a, 1b) oder durch eine Schwerpunktverlagerung der Sensorvorrichtung (S, A, B) änderbar ist.

9. Sensorvorrichtung (S, A, B) nach einem der Ansprüche 1 bis 8, **gekennzeichnet durch** mindestens einen Taster, der am nicht-gestellfesten Starrkörper (1b) angebunden ist.

10. Sensorvorrichtung (S, A, B) nach einem der Ansprüche 1 bis 9, **dadurch gekennzeichnet, dass** mindestens zwei Zugelemente (2, 3) durch andere elastische Elemente ersetzt sind.

11. Sensorvorrichtung (S, A, B) nach einem der Ansprüche 1 bis 10, **dadurch gekennzeichnet, dass** jeder Starrkörper (1a, 1b) einen Kompaktkörper (Ka, Kb), aus dem mindestens ein Ausleger (Xa, Xb) herausgeführt ist, aufweist, wobei die Ausleger (Xa, Xb) eine so große Ausladung in Richtung des anderen Starrkörpers (1b, 1a) aufweisen, dass sie in einem Teilbereich aneinander vorbeigeführt sind, und ein aktiv einstellbares Zugelement (3) an jeweils einen Knotenpunkt (4) der Ausleger (Xa, Xb) so angebunden ist, dass es diesen Teilbereich durchläuft.

12. Verfahren zur Ermittlung einer äußeren Kraft und ihres Angriffspunkts mithilfe der Sensorvorrichtung nach einem der Ansprüche 1 bis 11, umfassend folgende Schritte:
a. Einstellung eines für eine bestimmte Messaufgabe optimalen Referenzzustands der Sensorvorrichtung (S, A, B),
b. Belastung der Messoberfläche am nicht-gestellfesten Starrkörpers (1b) mit der zu ermittelnden äußeren Kraft (8), wodurch der Referenzzustand in einen verformten Zustand überführt wird,
c. Detektion einer Änderung einer optischen Pfadlänge (12) zwischen den beabstandeten Reflexionselementen (10) der sensorfähigen optischen Fasern der sensorischen Zugelemente,
d. ergänzende Differenzbetrachtung der mechanischen Gleichgewichtsbedingungen im Referenzzustand und im verformten Zustand und Rückrechnung auf
einen Betrag der äußeren Kraft (8),
eine Richtung der äußeren Kraft (8),
einen Angriffspunkt der äußeren Kraft (8).

13. Verwendung der Sensorvorrichtung (S, A, B) nach einem der Ansprüche 1 bis 11 und des Verfahrens nach Anspruch 12 zur Kraftmessung, Kraftlokalisation, Massen- oder Schwerpunktbestimmung in der Robotik oder Wägetechnik.
